# FASCICULE DE BREVET EUROPEEN

(11) **EP 1 462 023 B1**
(45) Date de publication et mention de la délivrance du brevet: **24.05.2006**
(21) Numéro de dépôt: 04290829.3
(22) Date de dépôt: 29.03.2004
(51) Int. Cl.: A45D 34/04, A45D 40/26, A46B 9/02

(54) **Applicateur de produit cosmétique**
Kosmetikapplikator
Cosmetic applicator

(30) Priorité: 28.03.2003 FR 0303861
(43) Date de publication de la demande: 29.09.2004
(73) Titulaire: L'OREAL, 75008 Paris (FR)
(72) Inventeur: Gueret, Jean-Louis, 75016 Paris (FR)
(74) Mandataire: Tanty, François

(56) Documents cités:
- EP-A- 0 651 955
- US-A- 5 161 554
- US-A- 5 161 555

## Description

La présente invention concerne un applicateur de produit cosmétique, y compris de soin, notamment un applicateur de vernis à ongles ou de mascara.

Divers applicateurs pour les ongles ou les cils comportant un mélange de poils ont déjà été proposés.

On connaît ainsi par la demande de brevet européen EP-A-0 556 081 un pinceau pour appliquer un vernis à ongles comportant un mélange de poils de différents diamètres.

Le brevet européen EP 0 239 270 décrit une brosse à mascara combinant des poils souples et des poils raides afin d'améliorer le chargement en mascara et le peignage des cils.

On connaît également par la demande de brevet européen EP-A-0 651 955 un pinceau pour appliquer un vernis à ongles comportant deux ensembles de poils ayant des propriétés mécaniques différentes, afin de former des espaces relativement importants entre les poils et retenir une plus grande quantité de vernis.

Par ailleurs, le brevet américain US 5 161 554 décrit une brosse à mascara comportant des poils de section transversale alternativement de grand diamètre et de petit diamètre sur toute la longueur du poil.

Il existe un besoin pour améliorer encore les performances d'un applicateur de produit cosmétique, notamment son autonomie, tout en ayant un applicateur fiable et simple à fabriquer.

Il existe encore un besoin pour disposer d'un applicateur de produit cosmétique capable d'appliquer des produits ayant des viscosités variées.

L'invention vise notamment à répondre à tout ou partie de ces besoins.

L'invention a ainsi pour objet, selon un premier de ses aspects parmi d'autres, un applicateur de produit cosmétique, notamment de vernis à ongles ou de mascara, comportant au moins deux éléments d'application, notamment deux poils ou deux dents, comportant chacun au moins un motif périodique présentant au moins une ondulation, au moins deux motifs périodiques étant différents.

L'invention a encore pour objet, selon un autre de ses aspects, un applicateur de produit cosmétique, notamment de vernis à ongles ou de mascara, comportant au moins deux poils comportant chacun au moins un motif périodique, au moins deux motifs périodiques étant différents.

L'invention a encore pour objet, selon un autre de ses aspects, un applicateur de produit cosmétique, notamment de vernis à ongles ou de mascara, comportant au moins deux poils comportant chacun au moins une portion ondulée, les portions ondulées de ces deux poils différant l'une de l'autre par au moins leur forme et/ou leur fréquence et/ou leur amplitude, l'une au moins de ces portions ondulées comportant de préférence un motif se répétant de façon périodique.

L'expression « motif périodique » désigne, au sein d'un élément d'application qui peut être un poil, une partie de celui-ci qui se reproduit sensiblement, de manière périodique, le long de l'élément d'application.

Un motif périodique présentant au moins une ondulation peut être déterminé par trois composantes que sont sa forme, par exemple sinusoïdale ou en dents de scie, son amplitude, c'est-à-dire son encombrement mesuré dans une direction orthogonale à la direction générale longitudinale de l'élément d'application, et sa fréquence spatiale, c'est-à-dire le nombre de motifs reproduits par unité de longueur de l'élément d'application. Un même motif peut être répété plusieurs fois sur toute la longueur de l'élément d'application. Un élément d'application peut comporter un motif unique ou moins d'un motif unique.

La longueur du motif peut correspondre sensiblement à la longueur de l'élément d'application. Dans ce cas, la forme du motif peut être définie par une fonction périodique telle que par exemple une fonction sinusoïdale ou génératrice de dents de scie.

Un poil comportant un motif périodique peut être réalisé par exemple par découpe d'une fibre de plus grande longueur dans laquelle le motif est présent plusieurs fois. La fabrication d'une telle fibre peut se trouver facilitée par le fait que le motif se répète de façon périodique.

Dans le cas notamment où l'élément d'application est un poil, un motif périodique peut aussi comporter au moins une rugosité qui peut être liée par exemple à la présence d'une ou plusieurs charges dans la matière du poil ou à sa surface, ou comporter une ou plusieurs encoches. Le motif périodique peut être déterminé par la fréquence et la forme desdites encoches, ou par la fréquence et la répartition surfacique de la ou des charges au sein d'un même motif.

Le motif périodique peut encore être formé par une variation périodique de la section transversale du poil lorsqu'on se déplace le long de celui-ci.

Un motif périodique d'un poil peut comporter au moins une ondulation et/ou au moins une charge et/ou au moins une variation de section transversale du poil et/ou une encoche et/ou d'autres reliefs encore.

Un avantage de la présente invention est de permettre de favoriser la formation d'espaces entre les poils, ces espaces facilitant la rétention du produit par capillarité, par comparaison avec le cas où les poils utilisés seraient tous entièrement rectilignes ou de même motif. L'autonomie de l'applicateur peut être améliorée, en vue notamment de permettre à l'utilisateur d'appliquer le produit, notamment sur les ongles, en une seule couche d'épaisseur suffisante.

Un autre avantage de la présente invention est de permettre, le cas échéant, lors du passage de l'applicateur au travers d'un essoreur, de retenir entre les poils davantage de produit que dans un applicateur comportant des poils rectilignes ou de même motif.

Les éléments d'application peuvent présenter, grâce aux motifs périodiques, et notamment grâce à des portions ondulées, plus de souplesse que des éléments d'application purement rectilignes.

Dans le cas de poils comportant des motifs périodiques différents, la répartition des extrémités libres des poils peut être plus homogène.

Deux motifs périodiques différents peuvent appartenir à deux poils distincts. En variante, deux motifs périodiques différents peuvent appartenir à un même poil.

Des motifs périodiques différents peuvent présenter des ondulations de formes différentes. Par exemple, l'un des motifs peut présenter une forme de dents de scie et l'autre une forme de sinusoïde.

Des motifs périodiques différents peuvent encore présenter des ondulations d'amplitudes différentes. Ces motifs peuvent avoir même forme, c'est-à-dire être tous deux en dents de scie ou tous deux de forme sinusoïdale, ou avoir des formes différentes. Ces motifs peuvent avoir ou non même fréquence spatiale.

L'amplitude d'un motif peut être comprise entre 20 µm et 3 mm, par exemple.

Des motifs périodiques différents peuvent encore présenter des ondulations de fréquences spatiales différentes. Ces motifs peuvent avoir même forme et même amplitude, le cas échéant.

La fréquence spatiale d'un motif peut être comprise entre 1/24 et 1/4 motif par millimètre de poil, par exemple.

Deux motifs périodiques différents présentant des ondulations peuvent à la fois comporter des formes différentes, des amplitudes différentes et des fréquences spatiales différentes, ou bien encore différer par seulement deux de leurs trois composantes.

L'applicateur peut comporter plus de deux ensembles de poils ayant des motifs périodiques différents.

La proportion des poils comportant un même motif peut varier dans une large mesure. Par exemple, l'applicateur peut comporter 50 % de poils comportant un premier motif et 50 % de poils comportant un deuxième motif, différent du premier. Cette répartition peut être modifiée et l'applicateur peut comporter par exemple entre 1 et 99 % de poils comportant le premier motif, mieux entre 20 et 80 %, mieux encore entre 30 et 60 %, ces valeurs n'étant pas limitatives.

L'applicateur peut comporter au moins un poil comportant au moins une portion rectiligne, voire au moins un poil entièrement rectiligne.

L'applicateur peut comporter au moins un poil ayant au moins une portion rectiligne et au moins un motif périodique présentant au moins une ondulation.

L'un au moins des poils comporte des motifs périodiques sur toute sa longueur.

L'applicateur peut comporter au moins deux poils de longueurs différentes.

Au moins un poil peut être torsadé, sur au moins une partie de sa longueur.

L'applicateur peut comporter des poils dont le diamètre peut être compris entre 5/100 et 40/100 mm, par exemple.

L'applicateur peut comporter au moins deux poils ayant des diamètres différents.

Par « diamètre d'un poil », on désigne le diamètre du cercle circonscrit à la plus grande section transversale du poil, lorsque celle-ci n'est pas circulaire.

Les poils peuvent être en matière synthétique, étant réalisés par exemple dans une matière thermoplastique, notamment thermoplastique élastomère.

Au moins un poil peut être en fibre naturelle.

Les poils peuvent avoir des natures différentes, par exemple être réalisés dans des matières ayant des températures de transition vitreuse différentes.

Les poils peuvent présenter une section transversale pleine ou creuse, circulaire ou non, les sections transversales étant constantes ou non le long des poils, par exemple passant alternativement par des sections de grand et de petit diamètres. Les poils peuvent éventuellement comporter un revêtement de flocage.

Comme mentionné plus haut, les poils peuvent également comporter, sur toute leur longueur ou sur une partie seulement de celle-ci, une charge, par exemple d'un composé magnétique, d'un composé absorbeur d'humidité, d'un composé destiné à créer à la surface du poil une rugosité ou encore à favoriser le glissement. Cette charge peut être répartie de façon à créer un motif périodique.

L'applicateur peut comporter une brosse, notamment une brosse à mascara.

Les poils ondulés peuvent permettre d'obtenir une répartition des extrémités libres des poils sur la brosse plus homogène qu'avec des poils rectilignes.

En outre, des poils ondulés peuvent se croiser et améliorer le chargement en produit et le peignage des cils ou des sourcils, le cas échéant.

La brosse peut comporter une âme torsadée, et les poils peuvent être supportés par l'âme et être réalisés autrement que par moulage par injection avec l'âme. La brosse peut, en variante, comporter une rangée de poils fixés par collage, agrafage ou surmoulage. En variante, les poils peuvent être fixés par matriçage d'un support. La brosse peut être agencée pour prélever du produit sur un pain de produit. Les poils peuvent ne s'étendre que d'un côté d'un support.

La surface enveloppe de la brosse peut présenter diverses formes et notamment des sections transversales sensiblement circulaires, ovales, polygonales ou autres, avec une ou plusieurs encoches ou crans.

L'âme peut être centrée ou non dans une section transversale de la surface enveloppe.

La section transversale de la surface enveloppe peut être constante ou non sur au moins une partie de la longueur de la brosse, et la brosse peut par exemple présenter une section transversale passant par un extremum entre ses deux extrémités axiales, cet extremum étant par exemple un maximum ou un minimum.

L'âme peut être rectiligne ou non, notamment être courbe, avec une courbure répartie sur toute sa longueur ou localisée seulement dans une région proche de celle servant à la fixation de la brosse sur une tige d'un applicateur. La brosse peut, le cas échéant, être courbe autour d'au moins deux axes non coplanaires.

Dans le cas d'une âme torsadée, la brosse peut comporter par exemple entre 5 et 60 poils par spire. Le nombre de poils par spire correspond au nombre d'extrémités de poils dénombrées par un observateur fixe au cours d'une rotation de 180° de la brosse autour de son âme.

La longueur des poils peut être comprise entre 1 et 7 mm, notamment entre 2 et 5 mm.

L'applicateur peut également constituer un pinceau, notamment un pinceau pour l'application d'un vernis à ongles.

Dans ce cas, l'applicateur peut comporter une tige et un faisceau de poils fixés dans un logement d'une portion d'extrémité de la tige, les poils pouvant notamment être fixés par collage, agrafage ou surmoulage. Ce logement peut présenter une section transversale oblongue, selon un axe transversal de plus grande longueur.

Le logement peut présenter une section transversale diminuant en rapprochement de son fond, cette diminution pouvant s'effectuer selon la divergence souhaitée pour les poils. Le fond du logement peut comporter un renfoncement dans lequel les poils sont fixés et qui débouche dans une partie du logement s'évasant en direction de l'ouverture de celui-ci, cette partie évasée permettant aux poils de s'écarter les uns des autres pour conférer au faisceau une forme élargie.

En particulier, le logement peut être agencé de telle sorte que les poils s'étendent à l'extérieur du logement sur une distance, mesurée parallèlement à l'axe transversal précité, supérieure à la dimension de la tige selon cet axe transversal au niveau du logement.

La longueur de la partie des poils s'étendant hors du logement de la tige peut être comprise entre 5 et 20 mm, par exemple.

Les extrémités libres des poils peuvent décrire sensiblement un arc de cercle, de rayon de courbure compris entre 2 et 15 mm par exemple, notamment compris entre 4 et 10 mm.

La largeur de l'ouverture du logement, mesurée perpendiculairement à l'axe transversal précité, peut être inférieure ou égale à 2 mm.

L'invention a encore pour objet, selon un autre de ses aspects, un dispositif de conditionnement et d'application d'un produit sur les ongles, notamment d'un vernis à ongles, comportant un récipient contenant le produit à appliquer et un applicateur tel que défini précédemment.

La plus grande dimension transversale de la portion de la tige immergée dans le produit contenu dans le récipient, lorsque l'applicateur est en place sur celui-ci, peut être inférieure ou égale à 5 mm.

La tige peut être agencée pour se fixer sur un bouchon de fermeture du récipient ; en variante, la tige peut être réalisée d'une seule pièce par moulage de matière plastique avec un bouchon de fermeture du récipient.

Selon un autre de ses aspects, l'invention a encore pour objet un dispositif de conditionnement et d'application d'un produit sur les cils ou les sourcils, notamment d'un mascara, comportant un récipient contenant le produit à appliquer et un applicateur tel que défini précédemment. Le dispositif peut comporter en outre, le cas échéant, un organe d'essorage de l'applicateur.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue schématique, en coupe axiale, d'un dispositif pour l'application d'un produit sur les ongles,
- la figure 2 représente de manière schématique un exemple de portion ondulée d'un poil,
- la figure 3 représente de manière schématique une portion ondulée, ayant un motif dont la forme est différente de celle du motif de la figure 2,
- la figure 4 représente de manière schématique deux portions ondulées ayant des motifs de même forme mais d'amplitudes et de fréquences spatiales différentes,
- la figure 5 représente de manière schématique deux portions ondulées ayant des motifs de même forme mais de fréquences spatiales différentes,
- la figure 6 représente de manière schématique deux portions ondulées ayant des motifs dont les formes sont différentes,
- la figure 7 représente de manière schématique trois poils dont un est rectiligne et les deux autres comportent des portions ondulées,
- la figure 8 représente de manière schématique deux portions ondulées réalisées avec des poils ayant des diamètres différents,
- la figure 9 représente de manière schématique l'extrémité d'un pinceau réalisé avec des poils de différents diamètres,
- la figure 10 représente de manière schématique un poil ayant deux portions ondulées dont les périodicités et les amplitudes sont différentes,
- la figure 11 représente de manière schématique un poil ayant une portion rectiligne et une portion ondulée,
- la figure 12 représente de manière schématique une portion ondulée et torsadée,
- la figure 13 est une section transversale selon XIII-XIII du poil de la figure 12,
- la figure 14 représente de manière schématique une portion de poil comportant un motif périodique à encoche,
- les figures 15 et 16 représentent de manière schématique des portions de poil comportant d'autres exemples de motifs périodiques,
- la figure 17 représente de manière schématique une portion de poil comportant un autre exemple de motif périodique,
- les figures 18 à 21 représentent de manière schématique d'autres exemples d'un couple de poils comportant des motifs périodiques différents,
- la figure 22 représente de manière schématique et partielle en élévation la portion d'extrémité d'un pinceau réalisé conformément à l'invention,
- les figures 23 et 24 sont des variantes de la figure 22,
- les figures 25, 26 et 27 sont des exemples parmi d'autres de sections transversales d'un faisceau de poils d'un applicateur selon l'invention,
- les figures 28 et 29 illustrent deux exemples de logements dans lesquels les poils du pinceau peuvent être fixés,
- les figures 30 et 31 illustrent une possibilité de fixation des poils par agrafage sur la tige de l'applicateur,
- la figure 32 illustre une autre manière de fixer les poils sur la tige de l'applicateur,
- la figure 33 est une coupe axiale schématique d'un dispositif d'application et de conditionnement d'un produit pour les cils ou les sourcils,
- la figure 34 est une vue de face de la brosse, selon la flèche XXXIV de la figure 33, représentant très schématiquement l'extrémité distale de la brosse,
- la figure 35 est une vue schématique et partielle représentant des poils pris entre les branches torsadées de l'âme de la brosse de la figure 33,
- la figure 36 représente schématiquement une variante de la section transversale de la brosse de la figure 33,
- les figures 37 à 47 représentent de manière schématique en section transversale des exemples de formes possibles, parmi d'autres, pour l'enveloppe de la brosse,
- la figure 48 illustre la possibilité d'excentrer l'âme de la brosse,
- la figure 49 représente de manière schématique une âme double, les poils n'étant pas représentés,
- les figures 50 à 66 représentent divers exemples de sections transversales de poils, parmi d'autres,
- les figures 67 à 71 représentent des exemples de portions d'extrémité de poils, et
- la figure 72 représente de manière schématique et partielle en section transversale un applicateur comportant des dents ondulées ayant des motifs périodiques différents.

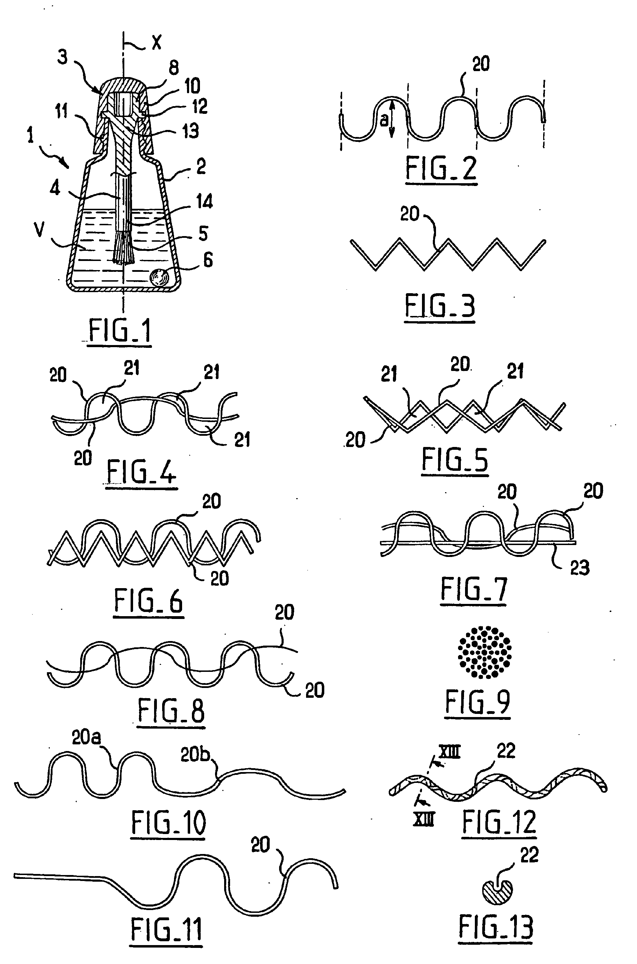

On a représenté à la figure 1 un dispositif 1 pour le conditionnement et l'application d'un produit sur les ongles, par exemple un vernis à ongles V, ce dispositif 1 comportant un récipient 2 contenant le vernis V et un applicateur 3 constituant un pinceau et comportant une tige 4 rectiligne selon un axe longitudinal X, munie à une extrémité d'un faisceau de poils 5 et à l'autre extrémité d'un organe de préhension 10 constituant également un bouchon de fermeture du récipient 2.

Le récipient 2 peut comporter comme illustré une bille 6, par exemple métallique, permettant d'homogénéiser le vernis V avant l'application, en secouant le dispositif 1.

La tige 4, qui est par exemple réalisée dans une matière plastique, comporte à son extrémité supérieure une jupe 8 permettant sa fixation dans un logement de l'organe de préhension 10, ce dernier étant configuré pour se visser sur le col 11 du récipient 2. Une collerette 12 est réalisée à la base de la jupe 8 pour venir en appui contre la tranche supérieure du col 11 lorsque l'applicateur est en place sur le récipient 2.

La tige 4 comporte, dans l'exemple considéré, sous la collerette 12, une partie conique 13 pouvant contribuer à l'étanchéité de la fermeture du récipient 2 lorsque l'applicateur 3 est en place sur ce dernier. L'étanchéité pourrait encore être obtenue par une coopération de surfaces de l'organe de préhension 10 et du col 11 du récipient.

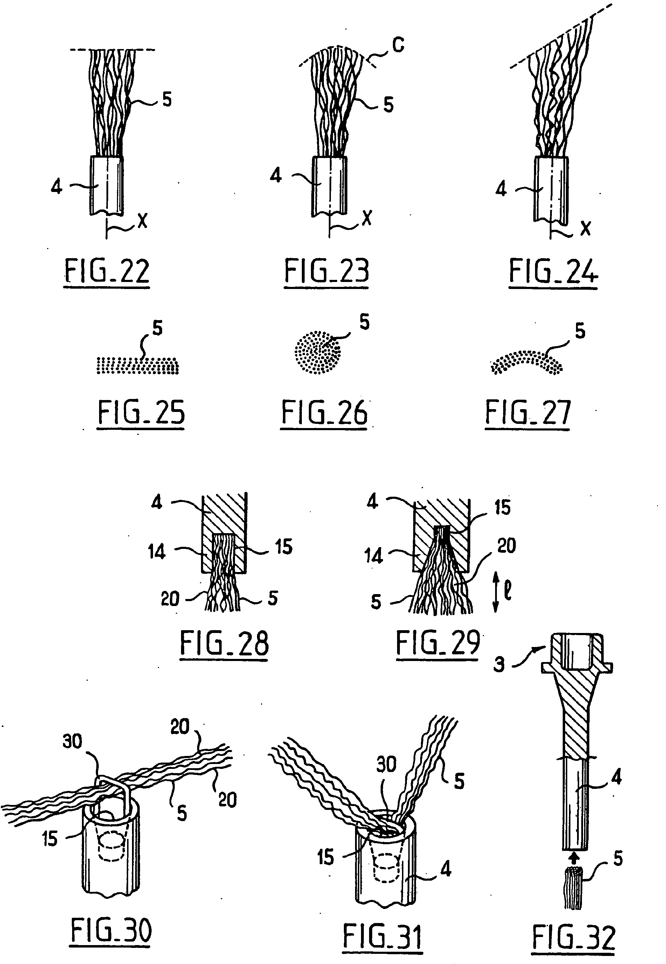

La tige 4 comporte également une portion d'extrémité inférieure 14 qui est pourvue d'un logement 15 non apparent sur la figure 1 mais représenté sur la figure 28, à l'intérieur duquel sont fixés les poils du pinceau.

Conformément à un aspect de l'invention, le faisceau 5 de poils comporte au moins deux portions ondulées ayant des motifs différents.

On a représenté sur la figure 2 une portion ondulée 20 d'un poil comportant une pluralité de motifs périodiques identiques, plus précisément trois dans l'exemple considéré, chacun de forme sinusoïdale. Chaque motif est délimité sur la figure 2 par deux traits verticaux en pointillés. Une ondulation peut correspondre à une succession d'au moins un relief en creux et d'un relief en saillie.

Les composantes d'un motif présentant une ondulation sont sa forme, son amplitude *a* et sa fréquence spatiale, c'est-à-dire le nombre de motifs par unité de longueur de poil.

Le motif peut être autre que sinusoïdal, par exemple en forme de dents de scie comme illustré à la figure 3. Pour un motif en dents de scie notamment, l'amplitude *a* est par exemple comprise entre 20 µm et 3 mm. La fréquence spatiale est par exemple comprise entre 1/24 et 1/4 motif par millimètre, la longueur d'un motif étant par exemple comprise entre 1 et 24 mm, voire entre 4 et 24 mm.

On a représenté, sur la figure 4, deux portions ondulées 20 ayant des motifs de même forme mais d'amplitudes et de fréquences spatiales différentes. Des espaces 21 sont formés entre les portions ondulées, ces espaces 21 permettant de retenir du produit par capillarité lorsque l'utilisateur retire l'applicateur 3 du récipient 2.

Les portions ondulées 20 ayant des motifs différents permettent d'obtenir un faisceau 5 plus aéré, capable de se charger aisément en produit.

Les portions ondulées 20 en forme de dents de scie de la figure 5 sont de même amplitude mais de fréquences spatiales différentes, ce qui permet là encore d'avoir des espaces 21 entre les poils.

Sur la figure 6, on a représenté deux portions ondulées 20, l'une ayant des motifs en forme de dents de scie et l'autre des motifs de forme sinusoïdale.

Le faisceau 5 peut comporter uniquement des poils ondulés, ou, en variante, comme illustré sur la figure 7, comporter également des poils rectilignes 23.

On peut réaliser les portions ondulées en extrudant des fibres au travers d'une filière de faible diamètre puis en amenant les fibres au contact de rouleaux profilés, en forme d'engrenages par exemple.

Les poils d'un même faisceau peuvent avoir différents diamètres, ainsi que représenté sur la figure 8.

La figure 9 représente en coupe transversale un faisceau 5 comportant des poils de faible diamètre, par exemple 5/100 mm, et des poils de plus grand diamètre, par exemple 40/100 mm.

Un poil peut comporter une portion ondulée 20 qui s'étend sur toute la longueur du poil ou sur une partie de sa longueur seulement, ou comporter plusieurs portions ondulées ayant des motifs différents. A titre d'exemple, on a représenté sur la figure 10 deux portions ondulées 20a et 20b d'un même poil ayant des motifs respectifs de même forme, à savoir sinusoïdale, mais d'amplitudes et de fréquences spatiales différentes. Les motifs de deux portions ondulées d'un même poil peuvent différer par une, deux ou trois des trois composantes du motif, de même que les motifs de deux portions ondulées appartenant à deux poils distincts.

La figure 11 représente un même poil ayant à la fois une portion rectiligne et une portion ondulée.

Un poil peut être ondulé et torsadé à la fois. On a représenté sur la figure 12 un poil de section transversale non circulaire, comportant une rainure capillaire 22 que l'on peut voir sur la figure 13. Le poil est torsadé de sorte que la rainure capillaire 22 forme une hélice le long du poil.

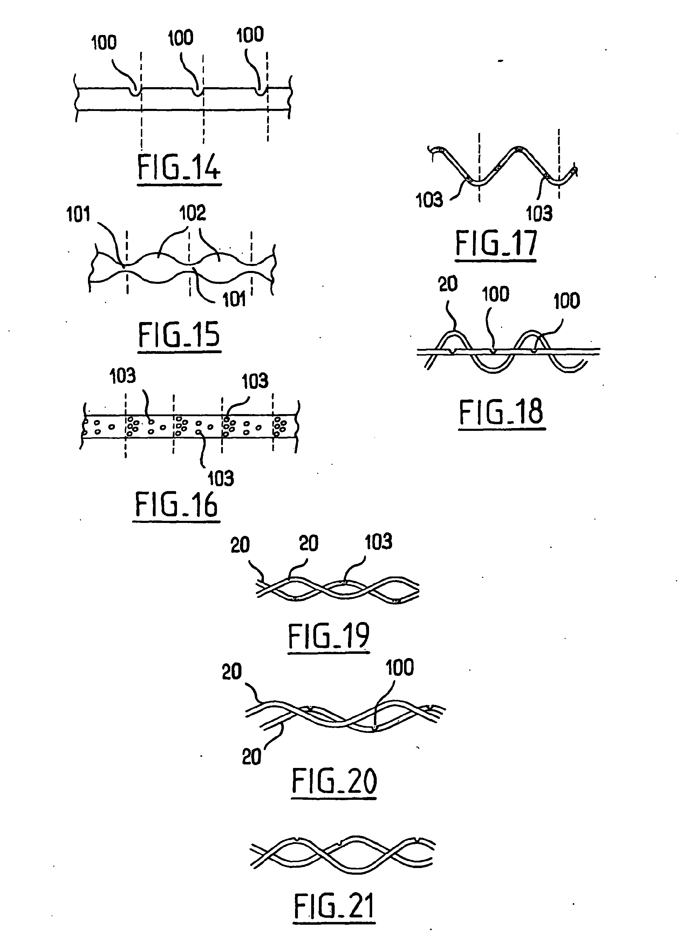

Un motif périodique peut présenter une ondulation comme décrit précédemment, mais il peut encore être constitué par une portion de poil qui se répète de manière périodique. Le motif peut ainsi correspondre, par exemple, à une portion de poil comportant une encoche 100 qui marque le poil à intervalles réguliers, comme illustré sur la figure 14.

Un motif périodique peut encore être constitué par une portion de poil présentant successivement des sections transversales 101 ayant un faible diamètre et des sections transversales 102 ayant un plus grand diamètre, ainsi qu'illustré sur la figure 15.

Sur la figure 16, le motif périodique est constitué par une certaine répartition des particules 103 d'une charge qui se répète sensiblement à intervalles réguliers sur le poil.

Bien entendu, un poil peut comporter une portion à la fois ondulée et pourvue de particules 103 d'une charge disposées à intervalles réguliers, comme illustré sur la figure 17.

Deux poils ayant des motifs différents peuvent être, comme illustré sur la figure 18, un poil rectiligne à encoches 100 régulières et un poil présentant une portion ondulée 20.

La figure 19 illustre la possibilité de mêler dans un même applicateur des poils présentant chacun des portions ondulées, l'une de celles-ci comportant en outre une charge répartie de façon périodique.

La figure 20 illustre la possibilité de mêler des poils comportant des portions ondulées, avec ou sans encoches 100.

La figure 21 illustre la possibilité de mêler des poils comportant des portions ondulées et des encoches disposées différemment sur les poils.

La longueur des poils du faisceau 5 peut être choisie de telle sorte que les extrémités libres des poils soient sensiblement contenues dans un même plan perpendiculaire à l'axe longitudinal X de la tige 4, comme illustré sur la figure 22. En variante, les extrémités libres des poils du faisceau 5 peuvent se situer le long d'une surface C non plane, par exemple convexe du côté opposé à la tige 4, ainsi qu'illustré sur la figure 23. Dans une autre variante, illustrée sur la figure 24, les extrémités libres des poils du faisceau 5 peuvent se situer sensiblement le long d'une surface s'étendant obliquement par rapport à l'axe X de la tige.

Le faisceau 5 de poils peut présenter différentes formes, en section transversale. Sur la figure 25, le pinceau est plat, la section du faisceau 5 étant sensiblement rectangulaire. Sur la figure 26, le pinceau est rond, la section transversale du faisceau 5 étant circulaire, tandis que sur la figure 27, la section transversale du faisceau 5 présente une forme incurvée pour mieux épouser la forme de l'ongle.

Le logement 15 recevant le faisceau 5 peut présenter, comme illustré sur la figure 28, une section transversale constante ce qui permet par exemple d'obtenir un pinceau dont les poils sont relativement serrés. En donnant au logement 15 une forme divergeant vers l'extérieur, on permet aux poils de s'écarter davantage les uns des autres afin de former un faisceau de poils plus large, ainsi qu'illustré sur la figure 29.

La longueur *l* de la partie des poils qui s'étend hors du logement 15 est par exemple comprise entre 5 et 20 mm.

Les poils du faisceau 5 peuvent être fixés dans le logement 15 par agrafage, collage, fusion ou surmoulage.

Les figures 30 et 31 illustrent la fixation du faisceau 5 dans le logement 15 par agrafage, à l'aide d'une agrafe 30. Cette dernière est engagée autour de la zone située sensiblement à mi-longueur du faisceau 5 de poils et son enfoncement dans le logement 15 provoque le repli des poils qui viennent en appui contre le bord du logement 15. L'agrafe 30 est engagée à force dans la tige 4 de l'applicateur 3.

Une autre manière d'insérer le faisceau 5 dans le logement 15 de la tige 4 est d'encoller les poils ainsi qu'illustré à la figure 32 et de les insérer à force dans la tige 4 ou de les agrafer dans celle-ci. Le vernis V contient un solvant apte à dissoudre le film de colle déposé sur les poils, lors de l'immersion du pinceau dans le vernis V contenu dans le récipient 2.

Le faisceau 5, avant d'être encollé, peut être plié en deux autour d'une agrafe utilisée pour sa fixation sur la tige 4.

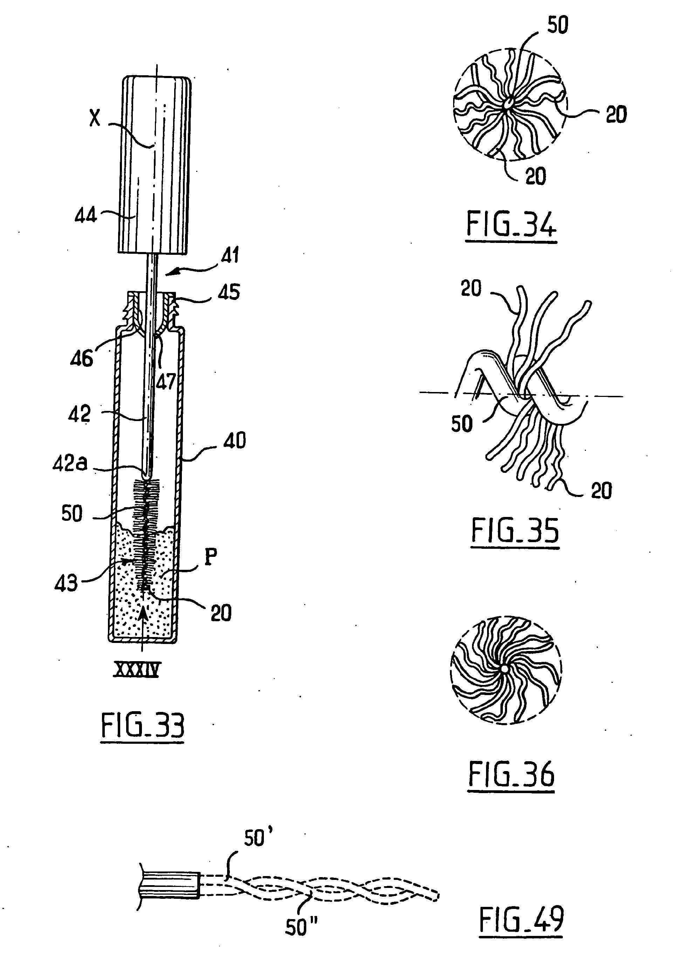

Un autre dispositif de conditionnement et d'application d'un produit selon l'invention est représenté à la figure 33.

Ce dispositif comporte un récipient 40 contenant un produit P à appliquer sur les cils ou les sourcils, par exemple du mascara, et un applicateur 41 comportant une tige 42 d'axe longitudinal X pourvue à une extrémité 42a d'une brosse 43 et à l'extrémité opposée d'un organe de préhension 44 servant également à la fermeture du récipient 40. Ce dernier comporte un col 45 qui est fileté extérieurement, de façon à permettre le vissage de l'organe de préhension 44.

Un organe d'essorage 46 est fixé à l'intérieur du col 45 pour essorer la tige 42 et la brosse 43 à leur sortie du récipient. Cet organe d'essorage 46 comporte dans l'exemple illustré une lèvre souple 47 définissant un orifice circulaire dont le diamètre correspond sensiblement à celui de la tige 42.

Bien entendu, l'invention n'est pas limitée à l'utilisation d'un organe d'essorage particulier et d'autres organes d'essorage peuvent être utilisés, par exemple des organes d'essorage comportant un bloc de mousse et/ou définissant une ou plusieurs fentes, floquées ou non.

Dans l'exemple illustré, la tige 42 est rectiligne mais elle pourrait être courbe sans que l'on sorte du cadre de la présente invention.

En outre, la tige 42 est représentée comme étant fixe par rapport à l'organe de préhension 44 mais elle pourrait être mobile par rapport à ce dernier, par exemple grâce à une liaison articulée, notamment une rotule.

La brosse 43 comporte une âme 50 formée par deux brins métalliques torsadés, cette âme 50 étant fixée à une extrémité dans un logement de la tige 42, étant par exemple insérée à force dans ce logement.

La brosse 43 comporte également des poils qui sont maintenus par serrage entre les brins torsadés de l'âme 50, comme on peut le voir sur la figure 35. Sur la figure 35, l'âme est représentée observée de côté avec l'extrémité proximale de la brosse disposée du côté gauche et son extrémité distale du côté droit, la brosse étant dite « torsadée à gauche ». Lorsque l'âme est torsadée à gauche, les branches de l'âme forment des spires qui, lorsque la brosse est observée en étant verticale avec son extrémité fixée dans la tige, c'est-à-dire son extrémité proximale, située en bas et son extrémité libre, c'est-à-dire l'extrémité distale, située en haut, montent de gauche à droite. Les avantages résultant d'une âme torsadée à gauche sont décrits dans le brevet US 6 227 735. L'invention s'applique également aux brosses comportant une âme torsadée à droite et à celles comportant des âmes non torsadées, les poils étant par exemple fixés par matriçage dans l'âme, comme décrit dans la demande de brevet européen EP-A-1 155 637, ou encore fixés par agrafage sur l'âme ou par surmoulage de l'âme sur les poils.

Les poils de la brosse 43 comportent des portions ondulées 20 qui peuvent être similaires à l'une de celles décrites précédemment en regard des figures 2 à 12. Les poils de la brosse 43 peuvent encore comporter des motifs périodiques tels que décrits en référence aux figures 14 à 21.

La brosse peut présenter une surface enveloppe, définie par les extrémités libres des poils, de section transversale circulaire, comme illustré à la figure 34, ou non circulaire.

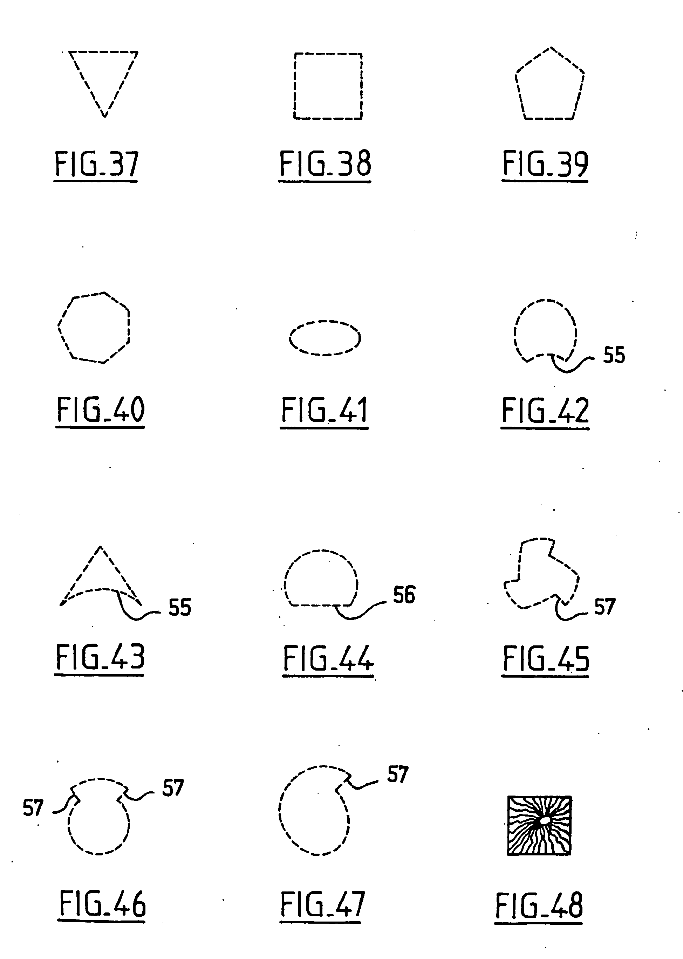

A titre d'exemple, on a représenté sur la figure 37 une surface enveloppe de section transversale polygonale, par exemple triangulaire.

On a représenté sur les figures 38 à 47 d'autres formes possibles encore de sections transversales pour la surface enveloppe de la brosse, parmi d'autres.

La figure 38 représente ainsi une section transversale de forme carrée, la figure 39 une section transversale de forme pentagonale et la figure 40 une section transversale de forme hexagonale. La figure 41 représente une section transversale de forme sensiblement ovale.

Les figures 42 et 43 illustrent la possibilité de réaliser la brosse avec au moins une encoche 55, laquelle peut être concave vers l'extérieur, comme illustré, cette encoche présentant une section transversale constante ou non lorsque l'on se déplace le long de la brosse. L'encoche 55 peut être réalisée sur une brosse de section transversale circulaire, comme illustré sur la figure 42, ou non circulaire, par exemple triangulaire comme illustré sur la figure 43. Dans ce dernier cas, l'encoche peut constituer tout un côté du triangle comme illustré, la brosse présentant alors une face concave.

La figure 44 illustre la possibilité de réaliser au moins une facette 56 sensiblement plane sur la brosse.

La figure 45 illustre la possibilité de réaliser la brosse avec au moins un cran 57, en l'espèce trois. La figure 46 représente une variante de réalisation d'une brosse comportant deux crans 57, et la figure 47 correspond à une variante de réalisation n'en comportant qu'un seul.

La brosse peut présenter une section transversale constante ou non, et une âme rectiligne ou non.

L'âme 50 peut être centrée ou non par rapport au contour de la surface enveloppe, lorsque la brosse est observée en section transversale. A titre d'illustration, on a représenté à la figure 48 une brosse dont l'âme est excentrée.

On peut faire subir aux poils de la brosse un battage mécanique ou amener la brosse au contact d'un organe de traitement comportant un élément chauffant et entraîner la brosse en rotation, afin de conférer aux poils de la brosse une déformation permanente, comme illustré sur la figure 36.

La rotation peut être effectuée dans les deux sens, notamment dans le sens inverse de celui avec lequel l'âme a été torsadée, le cas échéant.

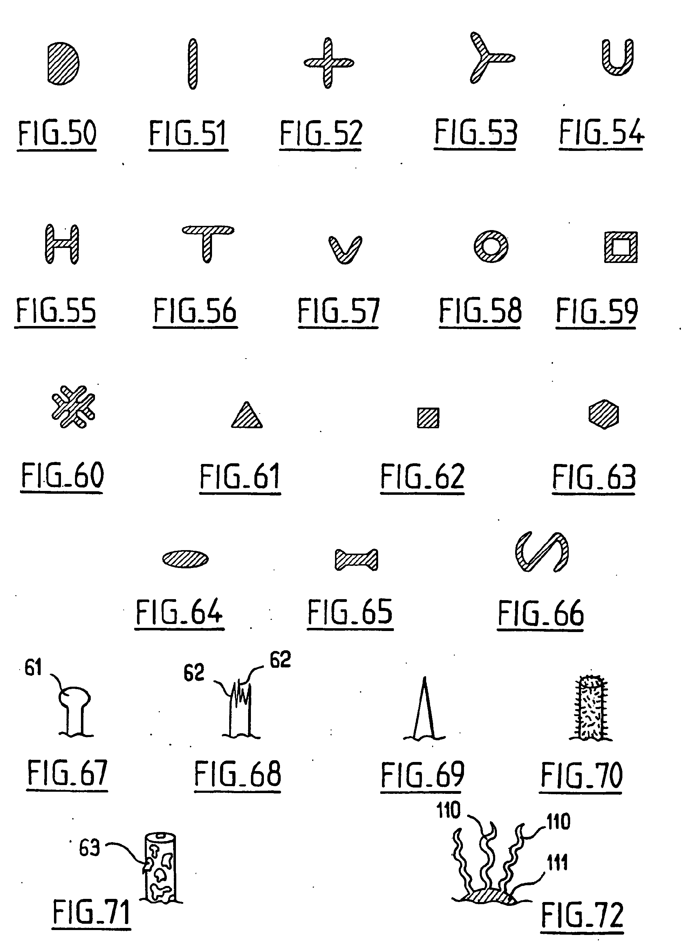

On peut réaliser l'âme autrement, par exemple utiliser une âme double, formée de deux âmes élémentaires 50' et 50" torsadées entre elles comme illustré à la figure 49. Chaque âme élémentaire 50', 50" de cette figure comporte deux brins torsadés ensemble et enserrant des poils.

On peut utiliser, pour réaliser l'âme, des brins métalliques de section circulaire ou non, gainés ou non.

Les poils utilisés peuvent présenter diverses sections transversales, autres que circulaires.

On peut notamment utiliser des poils présentant en section transversale l'une des formes représentées aux figures 50 à 66 de manière schématique, par exemple une forme circulaire avec un méplat comme illustré sur la figure 50, aplatie comme illustré à la figure 51, étoilée, par exemple en forme de croix comme illustré à la figure 52 ou à trois branches comme illustré sur la figure 53, de U comme représenté à la figure 54, de H comme représenté à la figure 55, de T comme représenté à la figure 56, de V comme représenté à la figure 57, une forme évidée, par exemple circulaire comme représenté à la figure 58 ou polygonale, notamment carrée comme représenté à la figure 59, formant des ramifications, par exemple en forme de flocon de neige comme illustré à la figure 60, une section polygonale par exemple triangulaire comme illustré à la figure 61, carrée comme représenté à la figure 62, ou hexagonale comme représenté à la figure 63, une forme oblongue, notamment lenticulaire comme représenté à la figure 64, ou en forme de sablier comme représenté à la figure 65.

On peut aussi utiliser des poils ayant des parties articulées les unes par rapport aux autres comme représenté à la figure 66.

Les poils peuvent le cas échéant subir un traitement destiné à former à leur extrémité une boule 61 comme illustré à la figure 67 ou des fourches 62 comme illustré à la figure 68, ou encore une pointe effilée comme illustré à la figure 69.

On peut aussi utiliser des poils floqués comme illustré à la figure 70 ou encore des poils réalisés par extrusion d'une matière plastique comportant une charge de particules 63, afin de conférer un micro-relief à la surface des poils comme illustré à la figure 71 ou leur conférer des propriétés magnétiques ou autres.

Les poils peuvent encore être réalisés avec un matériau présentant des propriétés favorisant le glissement.

Les poils peuvent être réalisés dans des matières synthétiques choisies par exemple parmi le polyéthylène, les polyamides notamment PA6, PA6/6, PA6/10 ou PA6/12, PA11, notamment le RILSAN® , un polymère HYTREL-PEBAX et autres polymères thermoplastiques.

Bien entendu, l'invention n'est pas limitée aux exemples qui viennent d'être décrits. On peut notamment combiner entre elles des particularités de réalisation des différents exemples qui viennent d'être décrits.

L'applicateur peut comporter trois ensembles ou plus de portions ondulées différant par leur motif et/ou leur diamètre et/ou leur longueur.

Un motif de portion ondulée peut avoir une forme ondulée non sinusoïdale, différente d'une forme en dents de scies, et d'une manière générale, décrite par toute fonction périodique. Un motif de portion ondulée peut ainsi avoir une forme générale de créneau, par exemple.

L'applicateur peut comporter des éléments d'application qui ne sont pas des poils ondulés mais des dents ondulées, comme illustré sur la figure 72, deux dents 110 ondulées présentant des motifs périodiques différents. Ces dents 110 peuvent être réalisées par moulage de matière plastique, avec un support 111 notamment. Le matériau du support et celui des dents peut être identique ou non.

Dans toute la description, y compris les revendications, l'expression « comportant un » doit être comprise comme étant synonyme de « comportant au moins un », sauf si le contraire est spécifié.

## Revendications

1. Applicateur (3 ; 41) de produit cosmétique, notamment de vernis à ongles (V) ou de mascara (P), comportant au moins deux éléments d'application comportant chacun au moins un motif périodique présentant au moins une ondulation, au moins deux motifs périodiques étant différents.

2. Applicateur selon la revendication 1, **caractérisé par le fait que** les éléments d'application sont des poils.

3. Applicateur de produit cosmétique, notamment de vernis à ongles ou de mascara, comportant au moins deux poils comportant chacun au moins un motif périodique, au moins deux motifs périodiques étant différents.

4. Applicateur selon l'une des revendications 2 et 3, **caractérisé par le fait que** les deux motifs périodiques différents appartiennent à deux poils distincts.

5. Applicateur selon l'une quelconque des revendications 2 à 4, **caractérisé par le fait que** les deux motifs périodiques différents appartiennent à un même poil.

6. Applicateur selon l'une des revendications 2 à 5, **caractérisé par le fait que** les deux motifs périodiques différents présentent des ondulations de formes différentes.

7. Applicateur selon la revendication précédente, **caractérisé par le fait que** l'un des motifs périodiques a une forme de dents de scie, l'autre une forme de sinusoïde.

8. Applicateur selon l'une quelconque des revendications 2 à 7, **caractérisé par le fait que** les deux motifs périodiques différents présentent des ondulations d'amplitudes *(a)* différentes.

9. Applicateur selon l'une quelconque des revendications 2 à 8, **caractérisé par le fait que** les deux motifs périodiques différents présentent des ondulations de fréquences spatiales différentes.

10. Applicateur selon l'une quelconque des revendications 2 à 9, **caractérisé par le fait qu'**il comporte entre 1 et 99 % de poils comportant un même motif périodique, mieux entre 20 et 80 %, mieux encore entre 30 et 60 %.

11. Applicateur selon l'une quelconque des revendications 2 à 10, **caractérisé par le fait qu'**il comporte au moins deux poils ayant des diamètres différents.

12. Applicateur selon l'une quelconque des revendications 2 à 11, **caractérisé par le fait qu'**il comporte au moins un poil comportant au moins une portion rectiligne.

13. Applicateur selon l'une quelconque des revendications 2 à 12, **caractérisé par le fait que** l'un au moins des poils comporte des motifs périodiques sur toute sa longueur.

14. Applicateur selon l'une quelconque des revendications 2 à 13, **caractérisé par le fait qu'**il comporte au moins deux poils de longueurs différentes.

15. Applicateur selon l'une quelconque des revendications 2 à 14, **caractérisé par le fait qu'**il comporte au moins un poil torsadé.

16. Applicateur selon l'une quelconque des revendications 2 à 15, **caractérisé par le fait qu'**il comporte au moins un poil présentant une section transversale circulaire.

17. Applicateur selon l'une quelconque des revendications 2 à 15, **caractérisé par le fait qu'**il comporte au moins un poil présentant une section transversale non circulaire.

18. Applicateur selon l'une quelconque des revendications 2 à 17, **caractérisé par le fait qu'**il comporte au moins un poil présentant une section transversale creuse.

19. Applicateur selon l'une quelconque des revendications 2 à 17, **caractérisé par le fait qu'**il comporte au moins un poil présentant une section transversale pleine.

20. Applicateur selon l'une quelconque des revendications 2 à 21, **caractérisé par le fait que** le diamètre des poils est compris entre 5/100 et 40/100 mm.

21. Applicateur selon l'une quelconque des revendications 2 à 20, **caractérisé par le fait que** les poils sont réalisés dans une matière thermoplastique, notamment thermoplastique élastomère.

22. Applicateur selon l'une quelconque des revendications 2 à 20, **caractérisé par le fait qu'**au moins un poil est en fibre naturelle.

23. Applicateur selon l'une quelconque des revendications 2 à 22, **caractérisé par le fait qu'**il comporte des poils ayant des natures différentes.

24. Applicateur selon l'une quelconque des revendications 2 à 23, **caractérisé par le fait qu'**il comporte une brosse (43), notamment une brosse à mascara.

25. Applicateur selon la revendication précédente, **caractérisé par le fait que** la brosse (43) comporte une âme torsadée (50) et **par le fait que** les poils sont supportés par l'âme (50).

26. Applicateur selon la revendication 24, **caractérisé par le fait que** la brosse comporte une rangée de poils fixés par collage, agrafage ou surmoulage ou matriçage d'un support.

27. Applicateur selon l'une quelconque des revendications 1 à 22, **caractérisé par le fait qu'**il constitue un pinceau, notamment un pinceau (5) de vernis à ongles (V).

28. Applicateur selon la revendication précédente, **caractérisé par le fait qu'**il comporte une tige (4) et **par le fait que** les poils sont fixés dans un logement (15) d'une portion d'extrémité (14) de la tige, notamment par collage, agrafage ou surmoulage.

29. Applicateur selon la revendication 1, **caractérisé par le fait que** les éléments d'application comportent des dents.

30. Dispositif (1) de conditionnement et d'application d'un produit sur les ongles, **caractérisé par le fait qu'**il comporte un récipient (2) contenant le produit à appliquer et un applicateur (3) tel que défini dans l'une quelconque des revendications 1 à 23 et 28.

31. Dispositif de conditionnement et d'application d'un produit sur les cils ou les sourcils, **caractérisé par le fait qu'**il comporte un récipient (40) contenant le produit à appliquer et un applicateur (41) tel que défini dans l'une quelconque des revendications 1 à 26 et 29.

32. Dispositif selon la revendication précédente, **caractérisé par le fait qu'**il comporte un organe d'essorage (46) de l'applicateur (41).

## Claims

1. A cosmetic applicator (3; 41) in particular for applying nail varnish (V) or mascara (P) comprising at least two applicator elements, each comprising at least one periodic pattern comprising at least one undulation, at least two periodic patterns being different.

2. An applicator according to claim 1, **characterized by** the fact that the applicator elements are bristles.

3. A cosmetic applicator, in particular for applying nail varnish or mascara, including at least two bristles, each presenting at least one periodic pattern, at least two periodic patterns being different.

4. An applicator according to claim 2 or claim 3, **characterized by** the fact that the two different periodic patterns belong to two distinct bristles.

5. An applicator according to any one of claims 2 to 4, **characterized by** the fact that the two different periodic patterns belong to the same bristle.

6. An applicator according to any one of claims 2 to 5, **characterized by** the fact that the two different periodic patterns present undulations of different shapes.

7. An applicator according to the preceding claim, **characterized by** the fact that one of the periodic patterns presents a sawtooth shape, the other a sinusoidal shape.

8. An applicator according to any one of claims 2 to 7, **characterized by** the fact that the two different periodic patterns present undulations of different amplitudes (a).

9. An applicator according to any one of claims 2 to 8, **characterized by** the fact that the two different periodic patterns present undulations of different spatial frequencies.

10. An applicator according to any one of claims 2 to 9, **characterized by** the fact that it includes 1% to 99% bristles presenting the same periodic pattern, better 20% to 80%, better still 30% to 60%.

11. An applicator according to any one of claims 2 to 10, **characterized by** the fact that it includes at least two bristles of different diameters.

12. An applicator according to any one of claims 2 to 11, **characterized by** the fact that it includes at least one bristle presenting at least one rectilinear portion.

13. An applicator according to any one of claims 2 to 12, **characterized by** the fact that at least one of the bristles presents periodic patterns along its entire length.

14. An applicator according to any one of claims 2 to 13, **characterized by** the fact that it includes at least two bristles of different lengths.

15. An applicator according to any one of claims 2 to 14, **characterized by** the fact that it includes at least one twisted bristle.

16. An applicator according to any one of claims 2 to 15, **characterized by** the fact that it includes at least one bristle presenting a cross-section that is circular.

17. An applicator according to any one of claims 2 to 15, **characterized by** the fact that it includes at least one bristle presenting a cross-section that is not circular.

18. An applicator according to any one of claims 2 to 17, **characterized by** the fact that it includes at least one bristle presenting a cross-section that is hollow.

19. An applicator according to any one of claims 2 to 17, **characterized by** the fact that it includes at least one bristle presenting a cross-section that is solid.

20. An applicator according to any one of claims 2 to 19, **characterized by** the fact that the bristles are of a diameter lying in the range 5/100^{ths} of a millimeter to 40/100^{ths} of a millimeter.

21. An applicator according to any one of claims 2 to 20, **characterized by** the fact that the bristles are made of a thermoplastic material, in particular a thermoplastic elastomer.

22. An applicator according to any one of claims 2 to 20, **characterized by** the fact that at least one bristle is made of natural fiber.

23. An applicator according to any one of claims 2 to 22, **characterized by** the fact that it includes bristles of different kinds.

24. An applicator according to any one of claims 2 to 23, **characterized by** the fact that it comprises a brush (43) in particular a mascara brush.

25. An applicator according to the preceding claim, **characterized by** the fact that the brush (43) comprises a twisted core (50) and by the fact that the bristles are supported by the core (50).

26. An applicator according to claim 24, **characterized by** the fact that the brush presents a row of bristles that are secured by adhesive, by stapling, or by overmolding, or by stamping a support.

27. An applicator according to any one of claims 1 to 22, **characterized by** the fact that it constitutes a paint brush, in particular a brush (5) for applying nail varnish (V).

28. An applicator according to the preceding claim, **characterized by** the fact that it includes a stem (4) and by the fact that the bristles are secured in a housing (15) in an end portion (14) of the stem, in particular by adhesive, by stapling, or by overmolding.

29. An applicator according to claim 1, **characterized by** the fact that the applicator elements comprise teeth.

30. A conditioning and applicator device (1) for applying a substance to the nails, the device being **characterized by** the fact that it comprises a receptacle (2) containing the substance for application and an applicator (3) as defined in any one of claims 1 to 23, and 28.

31. A device for packaging and applying a substance to the eyelashes or the eyebrows, the device being **characterized by** the fact that it comprises a receptacle (40) containing the substance to be applied and an applicator (41) as defined in any one of claims 1 to 26, and 29.

32. A device according to the preceding claim, **characterized by** the fact that it includes a member (46) for wiping the applicator (41).

## Patentansprüche

1. Auftrageinrichtung (3; 41) für ein kosmetisches Produkt, insbesondere Nagellack (V) oder Wimperntusche (P), umfassend mindestens zwei Auftragelemente, die jeweils mindestens ein mindestens eine Wellung aufweisendes periodisches Motiv umfassen, wobei mindestens zwei periodische Motive verschieden sind.

2. Auftrageinrichtung nach Anspruch 1, **dadurch gekennzeichnet, dass** die Auftragelemente Borsten sind.

3. Auftrageinrichtung für ein kosmetisches Produkt, insbesondere Nagellack oder Wimperntusche, umfassend mindestens zwei Borsten, die jeweils mindestens ein periodisches Motiv umfassen, wobei mindestens zwei periodische Motive verschieden sind.

4. Auftrageinrichtung nach einem der Ansprüche 2 und 3, **dadurch gekennzeichnet, dass** die beiden verschiedenen periodischen Motive zu zwei verschiedenen Borsten gehören.

5. Auftrageinrichtung nach einem,der Ansprüche 2 bis 4, **dadurch gekennzeichnet, dass** die beiden verschiedenen periodischen Motive zu ein und derselben Borste gehören.

6. Auftrageinrichtung nach einem der Ansprüche 2 bis 5, **dadurch gekennzeichnet, dass** die beiden verschiedenen periodischen Motive Wellungen von verschiedenen Formen aufweisen.

7. Auftrageinrichtung nach dem vorhergehenden Anspruch, **dadurch gekennzeichnet, dass** eines der periodischen Motive ein Sägezahnform, das andere eine Sinuskurvenform hat.

8. Auftrageinrichtung nach einem der Ansprüche 2 bis 7, **dadurch gekennzeichnet, dass** die beiden verschiedenen periodischen Motive Wellungen von verschiedenen Amplituden (a) aufweisen.

9. Auftrageinrichtung nach einem der Ansprüche 2 bis 8, **dadurch gekennzeichnet, dass** die beiden verschiedenen periodischen Motive Wellungen von verschiedenen räumlichen Frequenzen aufweisen.

10. Auftrageinrichtung nach einem der Ansprüche 2 bis 9, **dadurch gekennzeichnet, dass** sie zwischen 1 und 99 %, besser zwischen 20 und 80 % und noch besser zwischen 30 und 60 % Borsten umfasst, die ein und dasselbe periodische Motiv umfassen:

11. Auftrageinrichtung nach einem der Ansprüche 2 bis 10, **dadurch gekennzeichnet, dass** sie mindestens zwei Borsten mit verschiedenen Durchmessern umfasst.

12. Auftrageinrichtung nach einem der Ansprüche 2 bis 11, **dadurch gekennzeichnet, dass** sie mindestens ein Borste umfasst, die mindestens einen geradlinigen Abschnitt umfasst.

13. Auftrageinrichtung nach einem der Ansprüche 2 bis 12, **dadurch gekennzeichnet, dass** mindestens eine der Borsten periodische Motive auf ihrer ganzen Länge umfasst.

14. Auftrageinrichtung nach einem der Ansprüche 2 bis 13, **dadurch gekennzeichnet, dass** sie mindestens zwei Borsten von verschiedenen Längen umfasst.

15. Auftrageinrichtung nach einem der Ansprüche 2 bis 14, **dadurch gekennzeichnet, dass** sie mindestens eine verdrillte Borste umfasst.

16. Auftrageinrichtung nach einem der Ansprüche 2 bis 15, **dadurch gekennzeichnet, dass** sie mindestens eine Borste umfasst, die einen kreisförmigen Querschnitt aufweist.

17. Auftrageinrichtung nach einem der Ansprüche 2 bis 15, **dadurch gekennzeichnet, dass** sie mindestens eine Borste umfasst, die einen nicht kreisförmigen Querschnitt aufweist.

18. Auftrageinrichtung nach einem der Ansprüche 2 bis 17, **dadurch gekennzeichnet, dass** sie mindestens eine Borste umfasst, die einen hohlen Querschnitt aufweist.

19. Auftrageinrichtung nach einem der Ansprüche 2 bis 17, **dadurch gekennzeichnet, dass** sie mindestens eine Borste umfasst, die einen vollen Querschnitt aufweist.

20. Auftrageinrichtung nach einem der Ansprüche 21, **dadurch gekennzeichnet, dass** der Durchmesser der Borsten zwischen 5/100 und 40/100 beträgt.

21. Auftrageinrichtung nach einem der Ansprüche 2 bis 20, **dadurch gekennzeichnet, dass** die Borsten aus einem thermoplastischen Material, insbesondere thermoplastischem Elastomer, hergestellt sind.

22. Auftrageinrichtung nach einem der Ansprüche 2 bis 20, **dadurch gekennzeichnet, dass** mindestens eine Borste aus Naturfaser besteht.

23. Auftrageinrichtung nach einem der Ansprüche 2 bis 22, **dadurch gekennzeichnet, dass** sie Borsten von verschiedenen Naturen umfasst.

24. Auftrageinrichtung nach einem der Ansprüche 2 bis 23, **dadurch gekennzeichnet, dass** sie eine Bürste (43), insbesondere eine Wimperntuschebürste, umfasst.

25. Auftrageinrichtung nach dem vorhergehenden Anspruch, **dadurch gekennzeichnet, dass** die Bürste (43) einen verdrillten Kern (50) umfasst und dass die Borsten von dem Kern (50) getragen sind.

26. Auftrageinrichtung nach Anspruch 24, **dadurch gekennzeichnet, dass** die Bürste eine Reihe von Borsten umfasst, die durch Verkleben, Verklammern oder Aufformen oder Prägen eines Halters befestigt sind.

27. Auftrageinrichtung nach einem der Ansprüche 1 bis 22, **dadurch gekennzeichnet, dass** sie einen Pinsel, insbesondere einen Pinsel (5) für Nagellack (V), bildet.

28. Auftrageinrichtung nach dem vorhergehenden Anspruch, **dadurch gekennzeichnet, dass** sie eine Stange (4) umfasst und dass die Borsten in einer Aufnahme (15) eines Endabschnitts (14) der Stange insbesondere durch Verkleben, Verklammern oder Aufformen befestigt sind.

29. Auftrageinrichtung nach Anspruch 1, **dadurch gekennzeichnet, dass** die Auftragelemente Zähne umfassen.

30. Vorrichtung (1) zum Verpacken und Auftragen eines Produkts auf die Nägel, **dadurch gekennzeichnet, dass** sie einen Behälter (2), der das aufzutragenden Produkt enthält, und eine Auftrageinrichtung (3) umfasst, wie sie in einem der Ansprüche 1 bis 23 und 28 definiert ist.

31. Vorrichtung zum Verpacken und zum Auftragen eines Produkts auf die Wimpern oder Augenbrauen, **dadurch gekennzeichnet, dass** sie einen Behälter (40), der das aufzutragende Produkt enthält, und eine Auftrageinrichtung (41) umfasst, wie sie in einem der Ansprüche 1 bis 26 und 29 definiert ist.

32. Vorrichtung nach dem vorhergehenden Anspruch, **dadurch gekennzeichnet, dass** sie ein Organ (46) zum Abstreifen der Auftrageinrichtung (41) umfasst.
